(19) Europäisches Patentamt
European Patent Office
Office européen des brevets

(11) **EP 4 751 547 A1**

(12) **EUROPEAN PATENT APPLICATION**
published in accordance with Art. 153(4) EPC

(43) Date of publication:
**03.06.2026 Bulletin 2026/23**

(21) Application number: **24884305.4**

(22) Date of filing: **23.09.2024**

(51) International Patent Classification (IPC):
**A01D 34/64** (2006.01)    **H02P 6/06** (2006.01)

(52) Cooperative Patent Classification (CPC):
**A01D 34/00; A01D 34/64; A01D 34/73;**
**A01D 34/78; A01D 34/82; H02P 6/06**

(86) International application number:
**PCT/CN2024/120466**

(87) International publication number:
**WO 2025/092298 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.10.2023 CN 202311428602**

(71) Applicant: **Nanjing Chervon Industry Co., Ltd.**
**Nanjing, Jiangsu 211106 (CN)**

(72) Inventor: **LU, Wenjing**
**Nanjing, Jiangsu 211106 (CN)**

(74) Representative: **Sun, Yiming**
**HUASUN Patent- und Rechtsanwälte**
**Friedrichstraße 33**
**80801 München (DE)**

(54) **ELECTRIC MOWER AND ELECTRIC TOOL**

(57) An electric power tool includes: a cutting assembly (120) that includes at least one cutting blade (122) and a cutting motor (M1) driving the cutting blade (122) to perform a cutting action; a power supply device (170) that is at least configured to supply power to the cutting motor (M1); and a controller (130) that is configured to estimate a moment of inertia of the cutting motor (M1), and control operation of the cutting motor (M1) according to the moment of inertia of the cutting motor (M1). The tool can realize fault detection on the cutting blade and control the operation of the cutting motor through the moment of inertia of the cutting motor, thereby improving reliability of the fault detection and control on the cutting blade.

FIG. 5

EP 4 751 547 A1

## Description

The present disclosure claims priority to Chinese Patent Application No. 202311428602.2, filed with the China National Intellectual Property Administration (CNIPA) on October 30, 2023, which is incorporated herein by reference in its entirety.

## TECHNICAL FIELD

The present disclosure relates to the technical field of fault detection for electric power tools, and in particular to an electric lawn mower and an electric power tool.

## BACKGROUND

Electric power tools have been widely used in the tool field because of their high practicality. To achieve corresponding functions, some electric power tools are usually provided with rotating assemblies, such as cutting assemblies in lawn mowers, fans of electric motors and the like. If the cutting assemblies or the fans of the electric motors are faulty, functional effects of the electric power tools will be seriously affected.

This part is merely intended to provide background information related to the present disclosure, and does not necessarily constitute the prior art.

## SUMMARY

An objective of the present disclosure is to solve or at least mitigate part or all of the aforementioned problems. In view of this, an objective of the present disclosure is to provide an electric lawn mower and an electric power tool, to realize highly reliable fault detection on a rotating assembly of the electric power tool.

According to an aspect of the present disclosure, an electric lawn mower includes: a cutting assembly that includes a cutting blade and a cutting motor driving the cutting blade to perform a cutting action; a power supply device that includes at least one battery pack and supplies power to the cutting motor; and a controller, where the controller is configured to determine whether the cutting blade is faulty according to a moment of inertia of the cutting motor, and control the cutting motor to stop or slow down when determining that the cutting blade is faulty.

In some embodiments, the controller includes a moment-of-inertia estimation module, and the moment-of-inertia estimation module is configured to estimate the moment of inertia according to mechanical data of the cutting motor.

In some embodiments, the mechanical data of the cutting motor includes at least an output torque and a rotational speed of the cutting motor.

In some embodiments, the controller controls operation of the cutting motor via vector control to realize a function of the electric lawn mower.

In some embodiments, the controller is configured to estimate the moment of inertia of the cutting motor via model reference adaptive control (MRAC), and control operation of the cutting motor based on the moment of inertia.

In some embodiments, the controller is configured to estimate the moment of inertia of the cutting motor via recursive least-squares (RLS) identification, and control operation of the cutting motor based on the moment of inertia.

In some embodiments, the controller is configured to estimate the moment of inertia of the cutting motor via a Kalman prediction unit, and control operation of the cutting motor based on the moment of inertia.

In some embodiments, the controller is configured to determine that the cutting blade is faulty when the moment of inertia meets a preset fault condition.

In some embodiments, the controller determines that the cutting blade is faulty when the moment of inertia exceeds a preset range.

In some embodiments, a fault of the cutting blade includes at least blade loss or blade damage.

In some embodiments, the cutting motor includes a three-phase brushless motor.

In some embodiments, the electric lawn mower includes at least one of a push lawn mower, a riding lawn mower, and an intelligent lawn mower.

According to another aspect of the present disclosure, an electric lawn mower includes: a drive motor that includes an output shaft;

a rotating device that is disposed on the output shaft and driven by the output shaft to rotate; and a controller that is configured to estimate a moment of inertia of the drive motor, and estimate a state change of the rotating device according to a change of the moment of inertia, thereby controlling operation of the drive motor.

In some embodiments, the controller controls the operation of the drive motor via vector control to realize a function of an electric power tool.

In some embodiments, the controller is configured to estimate the moment of inertia of the drive motor via MRAC.

In some embodiments, the controller is configured to estimate the moment of inertia of the drive motor via RLS identification.

In some embodiments, the controller is configured to determine whether the rotating device is faulty according to the moment of inertia, and control the drive motor to stop when determining that the rotating device is faulty.

In some embodiments, the rotating device includes a fan or a cutting blade.

According to another aspect of the present disclosure, an electric power tool includes: a drive motor that includes an output shaft; a rotating device that is disposed on the output shaft and driven by the output shaft to rotate; and a controller that is configured to estimate a moment of inertia of the drive motor, and estimate a state change of the rotating device according to a change of the moment of inertia, thereby controlling operation of the drive motor.

In some embodiments, the controller controls the operation of the drive motor via vector control to realize a function of the electric power tool.

In some embodiments, the controller is configured to estimate the moment of inertia of the drive motor via MRAC.

In some embodiments, the controller is configured to estimate the moment of inertia of the drive motor via RLS identification.

In some embodiments, the controller is configured to determine whether the rotating device is faulty according to the moment of inertia, and control the drive motor to stop when determining that the rotating device is faulty.

In some embodiments, the rotating device includes a fan or a cutting blade.

## BRIEF DESCRIPTION OF THE DRAWINGS

FIG. 1 is a schematic structural view of a lawn mower according to an embodiment of the present disclosure;

FIG. 2 is a schematic structural view of a lawn mower according to an embodiment of the present disclosure;

FIG. 3 is a schematic structural view of a cutting assembly according to an embodiment of the present disclosure;

FIG. 4 is a schematic electrical control diagram of a drive system of a cutting motor according to an embodiment of the present disclosure;

FIG. 5 is another schematic electrical control diagram of a drive system of a cutting motor according to an embodiment of the present disclosure;

FIG. 6 is still another schematic electrical control diagram of a drive system of a cutting motor according to an embodiment of the present disclosure;

FIG. 7 is a schematic structural view of an electric power tool according to an embodiment of the present disclosure;

FIG. 8 is another schematic structural view of an electric power tool according to an embodiment of the present disclosure;

FIG. 9 is a schematic structural view of a drive system of a drive motor according to an embodiment of the present disclosure;

FIG. 10 is another schematic electrical control diagram of a drive system of a drive motor according to an embodiment of the present disclosure;

FIG. 11 is still another schematic electrical control diagram of a drive system of a drive motor according to an embodiment of the present disclosure;

FIG. 12 is a model curve diagram for estimating a moment of inertia via a least squares (LS) method according to an embodiment of the present disclosure; and

FIG. 13 is a model curve diagram for estimating a moment of inertia via MRAC according to an embodiment of the present disclosure.

## DETAILED DESCRIPTION OF THE EMBODIMENTS

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

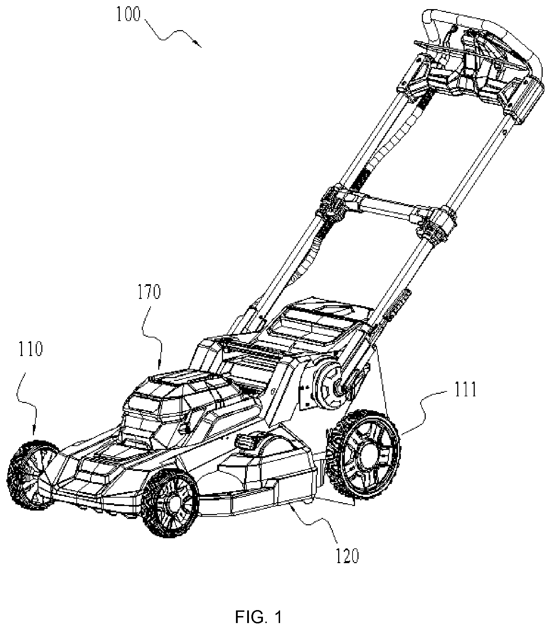

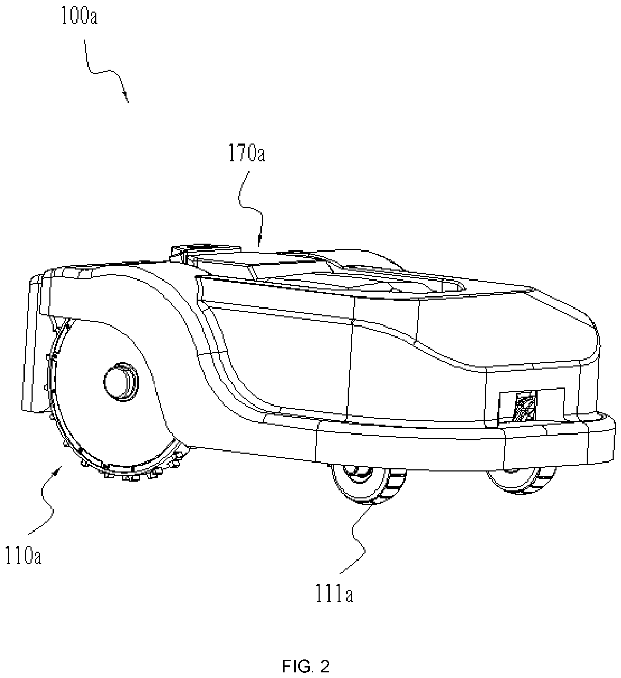

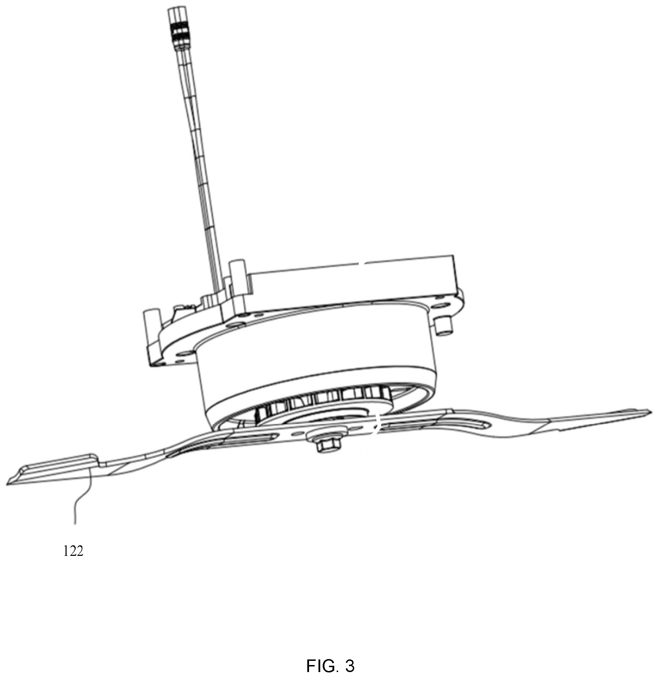

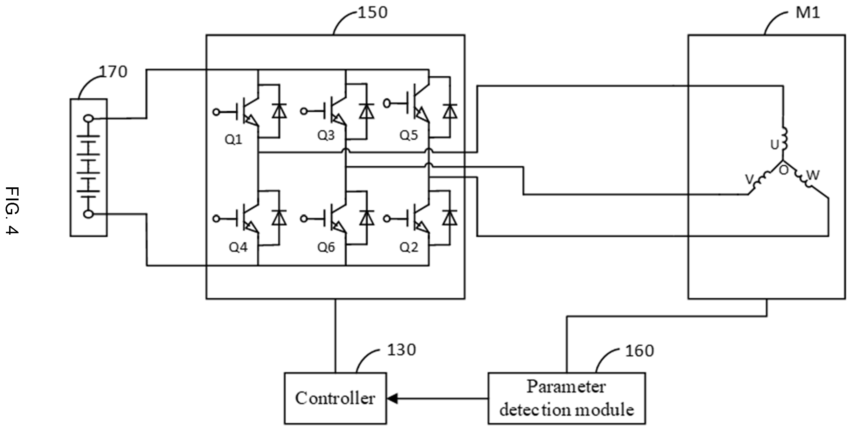

FIG. 1 is a schematic structural view of an electric lawn mower, specifically a push lawn mower, according to an embodiment of the present disclosure. FIG. 3 is a schematic structural view of another electric lawn mower, specifically an intelligent lawn mower, according to an embodiment of the present disclosure. The electric lawn mower in the present disclosure further includes a riding lawn mower. FIG. 2 is a schematic structural view of a cutting assembly according to an embodiment of the present disclosure. FIG. 4 is a schematic electrical control diagram of a drive system of a cutting motor according to an embodiment of the present disclosure. Referring to FIG. 1, electric lawn mower 100 includes: travel assembly 110, cutting assembly 120, and power supply device 170. The travel assembly 110 includes travel wheels 111 and a travel motor (not shown in the figure) driving the travel wheels to travel. The cutting assembly 120 includes a cutter head (not shown in the figure), at least one cutting blade 122 disposed on the cutter head, and cutting motor M1 driving the cutting blade 122 to perform a cutting action. The power supply device 170 is at least configured to supply power to the travel motor and the cutting motor M1. In some embodiments, the power supply device 170 includes a battery pack. Referring to FIG. 3, electric lawn mower 100a includes: travel assembly 110a having travel wheels 111a, a cutting assembly, and power supply device 170a. Referring to FIG. 4, the electric lawn mower further includes controller 130 that is configured to estimate a moment of inertia of the cutting motor M1, and control operation of the cutting motor M1 according to the moment of inertia.

Specifically, the travel motor can drive the travel wheels 111 to rotate, causing the electric lawn mower 100a to travel. The cutter head is connected to an output shaft of the cutting motor M1, such that the cutter head can rotate under the driving of the cutting motor M1. The cutting blade 122 is fixedly disposed on the cutter head. A plurality of cutting blades 122 on the cutter head can perform the cutting action. The cutter head is a circular thin disc. In some embodiments, a plurality of cutting blades, such as three, four or five cutting blades, may be fixedly disposed on one cutter head, which is not specifically limited in this embodiment of the present disclosure. It is to be understood that the cutting blades 122 are uniformly distributed on the cutter head. For example, in case of an odd number of cutting blades 122, the cutting blades 122 are spaced equidistantly along a circle with a same distance to a center of the cutter head, to achieve uniform distribution of the cutting blades 122 on the cutter head. In case of an even number of cutting blades 122, the cutting blades 122 are distributed in central symmetry about the center of the cutter head to achieve uniform distribution of the cutting blades 122 on the cutter head.

During operation of the electric lawn mower 100, as the plurality of cutting blades 122 are uniformly distributed on the cutter head, the cutter head can stably rotate under the driving of the cutting motor M1 to achieve a desirable mowing effect. If one or more cutting blades 122 on the cutter head are faulty, such as being lost or damaged, the balance of the distribution of the cutting blades on the cutter head is destroyed. For example, the uniform positional distribution or the uniform mass distribution is destroyed. Due to unbalanced rotation, the electric lawn mower 100 generates significant vibrations to affect the mowing effect.

In some embodiments, the cutting motor M1 may be an electric motor, and may specifically be a three-phase brushless motor that includes a rotor having a permanent magnet and electronically commutated three-phase stator windings U, V and W. In some embodiments, the three-phase stator windings U, V and W are connected in a star manner. In other embodiments, the three-phase stator windings U, V and W are connected in a delta manner. Certainly, other types of brushless electric motors are also within the scope of the present disclosure. The moment of inertia of the cutting motor M1 may be understood as a moment of inertia of the electric motor. When one or more cutting blades 122 on the cutter head are faulty, the cutter head starts to rotate unevenly, changing the moment of inertia. For example, the cutter head generates significant vibrations, such that the moment of inertia of the cutting motor M1 changes significantly. Therefore, during operation of the electric lawn mower 100, the controller 130 can obtain mechanical data of the cutting motor M1 in real time, so as to estimate the moment of inertia of the cutting motor M1 through the mechanical data. Then, the controller 130 can determine whether the cutting blade is faulty according to the moment of inertia, and control the operation of the cutting motor according to a change of the moment of inertia.

When the moment of inertia of the cutting motor M1 is abnormal, the controller 130 can determine that the cutting blade 122 is faulty, i.e., the cutting blade 122 is lost or damaged, and at this time can control the cutting motor M1 to stop or slow down, causing the cutting blade 122 to stop or slow down performing the cutting operation. When the moment of inertia of the cutting motor M1 is normal, the controller 130 can determine that the cutting blade 122 is not faulty, and can continuously control the operation of the cutting motor M1, causing the cutting blade 122 to perform the mowing operation. Specifically, the controller determines that the cutting blade is faulty when the moment of inertia exceeds a preset range. When the cutting blade 122 is not faulty, an estimated moment of inertia is within a numerical range. When a moment of inertia is not within the numerical range, it can be determined that the moment of inertia meets a preset fault condition, and the cutting blade 122 is faulty.

The electric lawn mower provided by this embodiment of the present disclosure estimates the moment of inertia of the cutting motor in real time when the cutting motor drives the cutting blade to perform the cutting action, so as to determine whether the cutting blade is lost or damaged according to the moment of inertia of the cutting motor. When determining that the cutting blade is lost or damaged, the electric lawn mower can control the cutting motor to stop in real time. The electric lawn mower can realize fault detection on the cutting blade through the moment of inertia of the cutting motor, improving reliability of the fault detection on the cutting blade.

Referring to FIG. 4, a drive system of the cutting motor may include the controller 130, the power supply device 170, drive circuit 150 for driving the cutting motor M1, and parameter detection module 160. The drive circuit 150 includes a plurality of electronic switches (Q1, Q2, Q3, Q4, Q5, and Q6) electrically connected between the power supply device 170 and the cutting motor M1. A control terminal of each electronic switch is electrically connected to the controller 130. The power supply device 170 provides a power signal for the controller 130 and the drive circuit 150 to realize a power supply function. The drive circuit 150 can output a drive signal to the cutting motor M1 according to the power signal and a pulse width modulation (PWM) signal provided by the controller 130, so as to drive the cutting motor M1 to operate. The parameter detection module 160 is configured to acquire operation data (including an operating current, an operating voltage, a torque or a rotational speed) of the cutting motor M1, and transmit acquired operation data to the controller 130, such that the controller outputs the PWM signal to the drive circuit according to actual operation data of the electric motor and target operation data of the user.

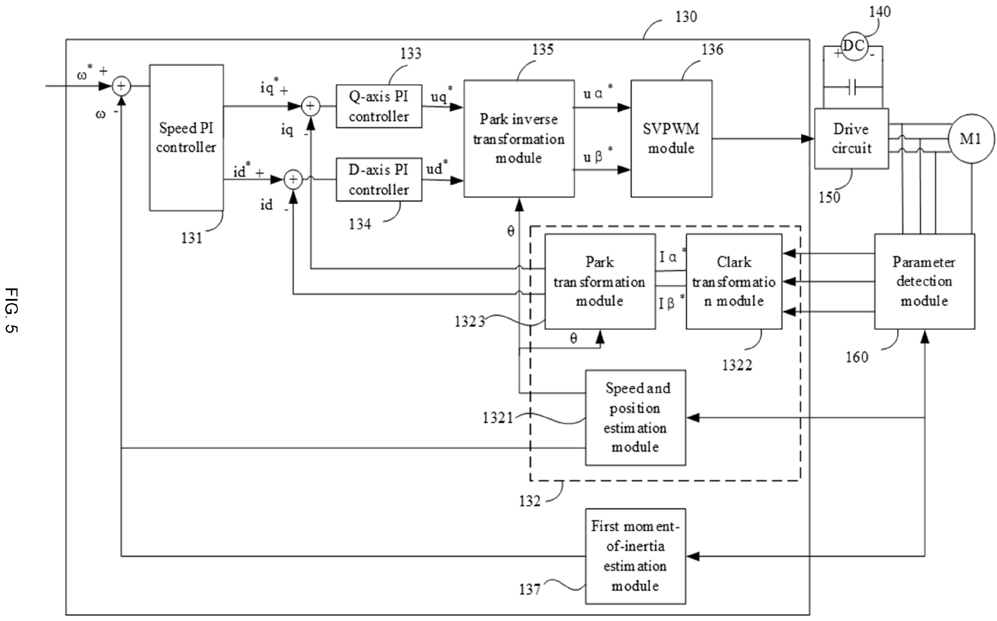

Optionally, the controller 130 can control the operation of the cutting motor M1 via vector control to realize a function of the electric lawn mower 100. Specifically, FIG. 5 is another schematic structural view of a drive system of a cutting motor according to an embodiment of the present disclosure. As shown in FIG. 5, a vector control system may be integrated into the controller 130. The vector control system may include at least a current loop circuit and a speed loop circuit, and may certainly further include a position loop circuit. The above three closed-loop control circuits are basic circuits that constitute a field-oriented control (FOC) circuit. The FOC circuit is not described in detail in this embodiment. Briefly, the current loop circuit includes two loops, namely a quadrature axis (i.e., a q-axis) and a direct axis (i.e., a d-axis). Each loop has two types of input parameters, one being preset current parameters iq* and id*, and the other being current parameters iq and id of the cutting motor M1 acquired by the parameter detection module 160. The speed loop circuit can affect input parameters of the current loop circuit. In other words, the speed loop circuit is to add a proportional integral (PI) loop (i.e., speed PI controller 131) in front of the current loop circuit, so as to obtain the input parameters iq* and id* in the current loop circuit according to a preset speed parameter and an actual rotational speed parameter of the motor. Thus, the current loop circuit and the speed loop circuit can form speed-current double closed-loop control. In fact, as shown in FIG. 5, the controller 130 further includes signal processing module 132. Speed and position estimation module 1321, Clark transformation module 1322, and Park transformation module 1323 are integrated into the signal processing module 132. The speed and position estimation module 1321 can estimate or directly detect a rotational speed of the cutting motor M1 or a position of a rotor. A phase current of the cutting motor M1 can be directly acquired by a sampling resistor (not shown). An acquired phase current is sequentially subjected to Clark transformation and Park transformation via the Clark transformation module 1322 and the Park transformation module 1323 to obtain the current parameters iq and id. Q-axis PI controller 133 outputs q-axis voltage uq* according to the current parameters iq and iq*, and d-axis PI controller 134 outputs d-axis voltage ud* according to the current parameter id and the input parameter id*. Park inverse transformation module 135 outputs intermediate control quantities uα* and uβ* according to the q-axis voltage uq* and the d-axis voltage ud*. Space vector pulse width modulation (SVPWM) module 136 can output a corresponding PWM signal according to the intermediate control quantities uα* and uβ*.

On the basis of the above embodiment, the controller 130 may include a moment-of-inertia estimation module, so as to estimate the moment of inertia according to the mechanical data of the cutting motor M1. The method for estimating the moment of inertia is not specifically limited in this embodiment of the present disclosure. Exemplarily, the method may include RLS identification, MRAC, extended Kalman filter (EKF), etc.

Optionally, referring to FIG. 5, the controller 130 is configured to estimate the moment of inertia of the cutting motor via the RLS identification.

Exemplarily, the controller 130 may include first moment-of-inertia estimation module 137. The first moment-of-inertia estimation module 137 can estimate the moment of inertia of the cutting motor via the RLS identification.

Specifically, when the first moment-of-inertia estimation module 137 estimates the moment of inertia, a recursive equation in an LS method may be acquired first: $\theta(k) = \theta(k - 1) + K(k) * [y(k) - \varphi^T(k) * \theta(k - 1)]$, where

$$K(k) = \frac{P(k-1)*\varphi(k)}{\lambda+\varphi^T(k)*P(k-1)*\varphi(k)}, \quad P(k) = \frac{1}{\lambda} * [I - K(k) * \varphi^T(k)] * P(k-1)$$, y is an output quantity,

$\varphi$ is an input quantity, $\theta$ is a constant, K is a gain matrix, I is a unit matrix, $\lambda$ is a forgetting factor, and $\lambda$ is in a range of [0.95,1]. This can reduce influences of old data during iteration.

Then, a mechanical motion equation for driving the cutting motor M1 (electric motor) may be obtained:

$$J * \frac{dw_m}{dt} = T_e - T_L - B_m * \omega_m$$, where J is a moment of inertia of a load (the cutter head and the cutting blade 122) of the electric motor, Bm is a windage and friction coefficient of the electric motor, Te is an output torque of the electric motor, TL is a load torque, and ωm is an actual rotational speed of the electric motor. During simulation, the windage and friction coefficient Bm may be set to 0, and thus the mechanical motion equation may be simplified to

$$T_e = T_L + J * \frac{dw_m}{dt}$$, which is denoted as Eq. (1). Discretizing the Eq. (1) may yield Eq. (2):

$$T_e(k-1) = T_L(k-1) + \frac{J(k-1)}{T}[\omega_m(k) - \omega_m(k-1)]$$ . By neglecting a change of the load torque TL, Eq.

(3) may be obtained: $$\omega_m(k) - \omega_m(k-1) = T * T_e(k-1) * \frac{1}{J(k-1)}$$ , thereby obtaining discretization

equation $$\omega_m(k-1) - \omega_m(k-2) = T * T_e(k-2) * \frac{1}{J(k-2)}$$ at time (k-2), which is denoted as Eq. (4). Subtracting the Eq.(3) from the Eq. (4) yields:

$$-2\omega_m(k-1) + \omega_m(k-2) + \omega_m(k) = T * [T_e(k-1) * T_e(k-2)] * \left( \frac{1}{J(k-1)} - \frac{1}{J(k-2)} \right)$$ .

thereby determining y(k) = $-2\omega_m$(k - 1) + $\omega_m$(k - 2) + $\omega_m$(k), $\varphi^T$(k) = $T$ * [$T_e$(k - 1) * $T_e$(k - 2)], and

$$\theta(k) = \left(\frac{1}{J(k-1)} - \frac{1}{J(k-2)}\right)$$ . With actual rotational speed ωm of the electric motor and output torque Te of the electric motor, corresponding moment of inertia J may be determined, thereby estimating the moment of inertia.

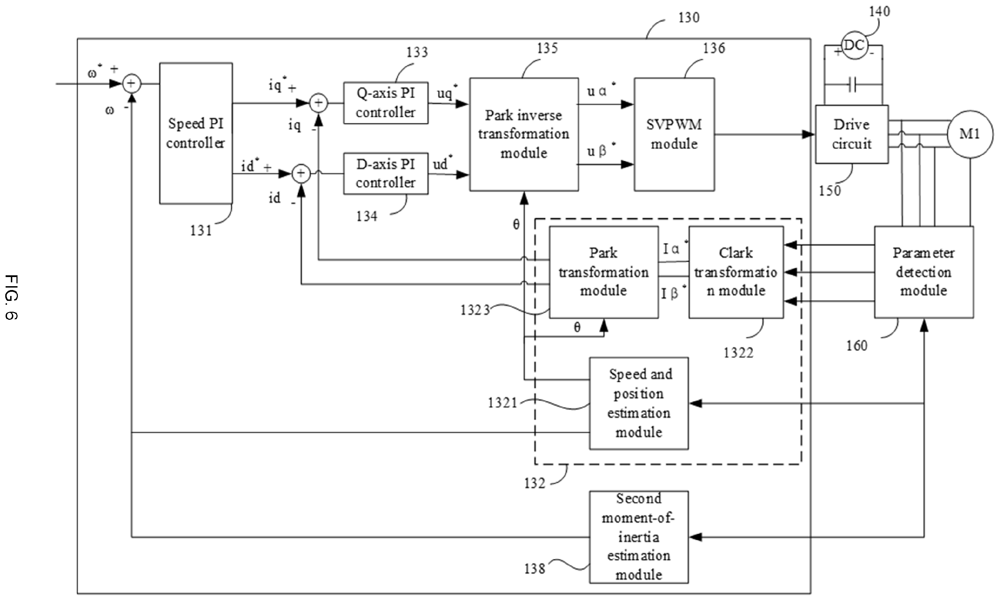

Optionally, the controller 130 is configured to estimate the moment of inertia of the cutting motor via the MRAC. FIG. 6 is still another schematic structural view of a drive system of a cutting motor according to an embodiment of the present disclosure. As shown in FIG. 6, the controller 130 may include second moment-of-inertia estimation module 138. The second moment-of-inertia estimation module 138 estimates the moment of inertia of the cutting motor M1 via the MRAC.

Specifically, when the second moment-of-inertia estimation module 138 estimates the moment of inertia,

according to the mechanical motion equation $$J * \frac{dw_m}{dt} = T_e - T_L - B_m * \omega_m$$ of the electric motor, a discretization equation at time k may be determined as $$\omega_m(k) = \omega_m(k-1) + \frac{T_s}{J}[T_e(k-1) - T_L(k-1)]$$ , and a

discretization equation at time k-1 may be determined as

$$\omega_m(k-1) = \omega_m(k-2) + \frac{T_s}{J}[T_e(k-2) - T_L(k-2)]$$ . According to the above two discretization equations, a reference model is determined as $\omega_m$(k) = 2 * $\omega_m$(k- 1) - $\omega_m$(k- 2) + b * $\Delta T_e$(k - 1), and an adaptive model

is determined as $$\omega_m^*(k) = 2 * \omega_m(k-1) - \omega_m(k-2) + b^* * \Delta T_e(k-1)$$ , where $\omega_m$(k) is an actual rotational speed of the electric motor, $\omega_m^*(k)$ is an estimated rotational speed of the electric motor, $$b = \frac{T_s}{J}$$ , b* = $T_s$/J*

(which is a to-be-identified parameter), and $\Delta T_e$(k - 1) = $T_e$ (k - 1) - $T_e$(k - 2). Therefore, a deviation between the reference model and the adaptive model is $$\Delta\omega_m(k) = \omega_m(k) - \omega_m^*(k)$$ . According to a discrete-time iterative parameter identification mechanism proposed by Landau, an adaptive algorithm may be designed:

$$b(k) = b(k-1) + \frac{\beta * \Delta T_e(k-1)}{1 + \beta * \Delta T_e(k-1)^2} * \omega_m(k)$$ . In this way, according to the output torque Te and the rotational

speed $\omega_m$ of the electric motor at each time, the moment of inertia b can be determined, thereby estimating the moment of inertia.

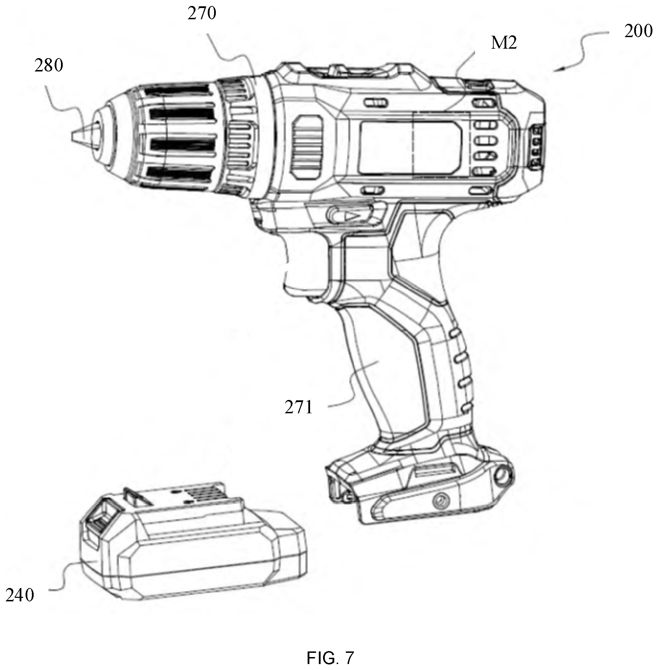

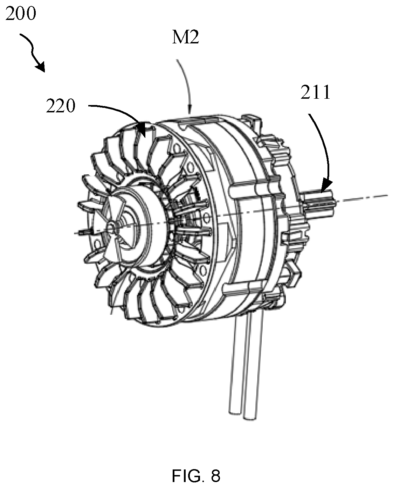

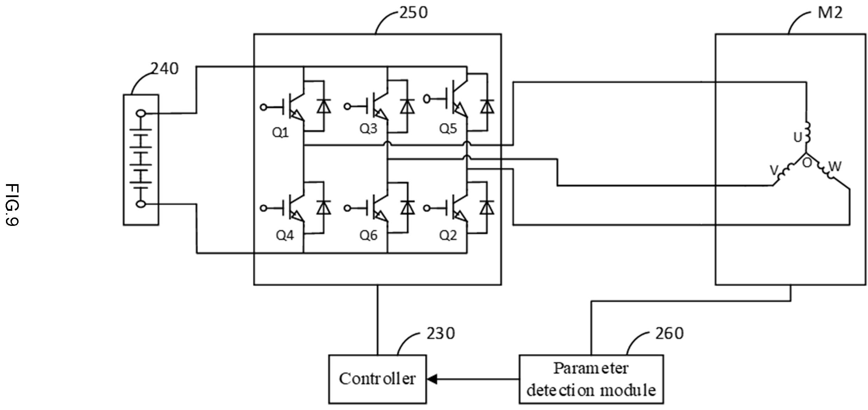

Based on a same concept, an embodiment of the present disclosure further provides an electric power tool. FIG. 7 is a schematic structural view of an electric power tool according to an embodiment of the present disclosure. FIG. 8 is another schematic structural view of an electric power tool according to an embodiment of the present disclosure. FIG. 9 is a schematic structural view of a drive system of a drive motor according to an embodiment of the present disclosure. Referring to FIG. 7, FIG. 8, and FIG. 9, the electric power tool 200 includes drive motor M2 that includes output shaft 211; rotating device 220 that is disposed on the output shaft 211, and driven by the output shaft 211 to rotate; and controller 230 that is configured to estimate a moment of inertia of the drive motor M2, and acquire a state change of the rotating device 220 according to a change of the moment of inertia.

Specifically, the electric power tool 200 may be a speed-regulating electric power tool such as a screwdriver, an electric drill, a wrench, and an angle grinder, an electric power tool that may be used to grind a workpiece such as a sander, an electric power tool that may be used to cut the workpiece such as a reciprocating saw, a circular saw, and a jig saw, and an electric power tool that may be configured for impacting such as an electric hammer. This tool may also be a garden tool such as a pruner, a chainsaw, and a riding lawn mower. In addition, this tool may also be used for other purposes, and is a blender for example. The electric power tool may fall within the protection scope of the present disclosure, provided that essential contents of the technical solutions disclosed below can be adopted. This embodiment of the present disclosure only takes the electric power tool 200 as the electric drill for example for exemplary description.

As shown in FIG. 7, the electric power tool 200 includes housing 270, electric motor 230, and power supply device 240. The drive motor M2 is disposed in the housing 270. An accommodating space can be formed in the housing 270, so as to accommodate the drive motor M2, a transmission mechanism and other electronic components such as a circuit board. As a body portion of the electric power tool 200, the housing 270 may further be provided with holding portion 271 to be held by a user. The drive motor M2 can convert electric energy into power that is transferred to functional component 280. The functional component 280 may be disposed on a front end of the housing 270.

The rotating device 220 may be a fan of the electric motor, which is driven by the drive motor M2 to rotate, to dissipate heat of the drive motor M2. Hence, the rotating device 220 may also be considered as a load of the drive motor M2. The drive motor M2 may be a three-phase brushless motor that includes a rotor having a permanent magnet and electronically commutated three-phase stator windings U, V and W. In some embodiments, the three-phase stator windings U, V and W are connected in a star manner. In other embodiments, the three-phase stator windings U, V and W are connected in a delta manner. However, it must be understood that other types of brushless electric motors are also within the scope of the present disclosure.

It is to be understood that when the rotating device 220 is the fan of the electric motor, blades of the fan constitute a circle and are uniformly distributed, i.e., a central angle between adjacent blades is the same. During operation of the drive motor M2, the fan of the electric motor can be driven to stably rotate, realizing a desirable heat dissipation effect. However, if one or more blades on the fan of the electric motor are faulty, such as being lost or damaged, a balance of the blades, including a uniform positional distribution or a uniform mass distribution, is damaged. When the fan of the electric motor rotates, due to unbalanced rotation, the moment of inertia of the fan changes. This affects the heat dissipation effect, and indirectly affects the moment of inertia of the drive motor M2.

In view of this, during operation of the drive motor M2, the controller 230 can obtain mechanical data of the drive motor M2 in real time, so as to estimate the moment of inertia of the drive motor M2 through the mechanical data. Then, the controller 230 can determine whether the rotating device 220 is faulty according to the moment of inertia, and control operation of the drive motor M2 according to a change of the moment of inertia.

Exemplarily, when the moment of inertia of the drive motor M2 is abnormal, the controller 230 can determine that the rotating device 220 is faulty, i.e., the blade on the fan of the electric motor is lost or damaged, and at this time can control the drive motor M2 to stop, causing the rotating device 220 to stop rotating for heat dissipation. When the moment of inertia of the drive motor M2 is normal, the controller 230 can determine that the rotating device 220 is not faulty, and can continuously control the operation of the drive motor M2, causing the rotating device 220 to rotate continuously for heat dissipation.

The controller determines that the cutting blade is faulty when the moment of inertia exceeds a preset range. When the rotating device 220 is not faulty, an estimated moment of inertia is within a numerical range. When a moment of inertia is not within the numerical range, it can be determined that the moment of inertia meets a preset fault condition, and the rotating device 220 is faulty.

The electric power tool provided by this embodiment of the present disclosure estimates the moment of inertia of the cutting motor in real time when the cutting motor drives the cutting blade to perform the cutting action, so as to determine whether the cutting blade is lost or damaged according to the moment of inertia of the cutting motor. When determining that the cutting blade is lost or damaged, the electric power tool can control the cutting motor to stop in real time. The electric power tool can realize fault detection on the cutting blade through the moment of inertia of the cutting motor, improving reliability of the fault detection on the cutting blade.

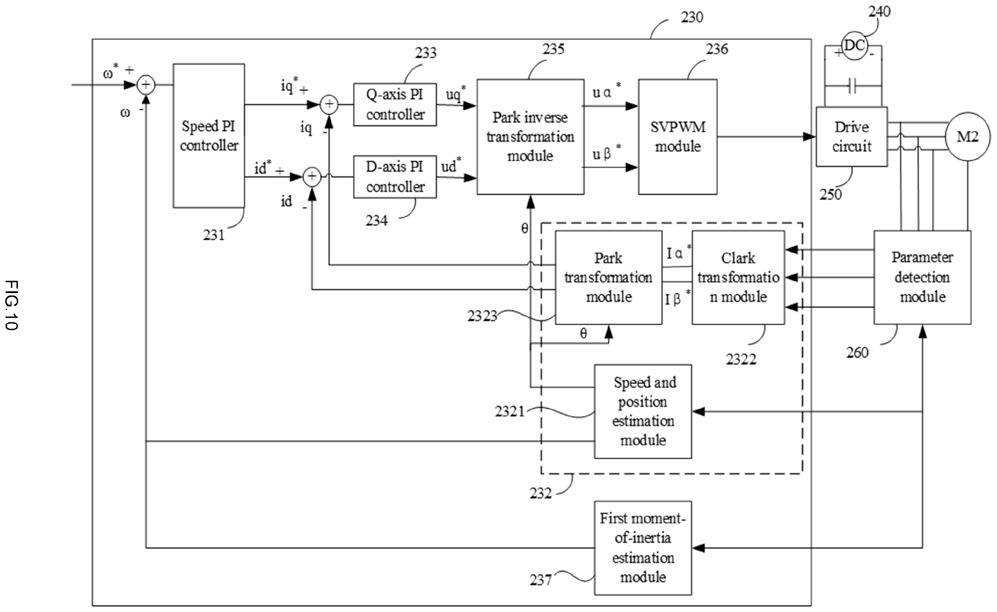

Exemplarily, the driving mode of the drive motor M2 may be the same as the driving mode of the cutting motor M1 in the above embodiment, i.e., the controller 230 may control the drive motor M1 via the vector control to realize a function of the electric power tool. FIG. 10 is another schematic structural view of a drive system of a drive motor according to an embodiment of the present disclosure. Referring to FIG. 9 and FIG. 10, the drive system may be structurally the same as the drive system of the cutting motor M1, and includes controller 230, power supply device 240, drive circuit 250 for driving the drive motor M2, and parameter detection module 260. The controller 230 may be integrated with a vector control system, and specifically includes speed PI controller 231, signal processing module 232 (including speed and position estimation module 2321, Clark transformation module 2322, and Park transformation module 2323), q-axis PI controller 233, d-axis PI controller 234, Park inverse transformation module 235, and SVPWM module 236. The related principle may refer to description on the cutting motor M1, and is not repeated herein.

Likewise, on the basis of the above embodiment, the controller 230 may include a moment-of-inertia estimation module, so as to estimate the moment of inertia of the drive motor M2 according to mechanical data of the drive motor M2. The method for estimating the moment of inertia is not specifically limited in this embodiment of the present disclosure. Exemplarily, the method may include RLS identification, MRAC, EKF, etc.

Optionally, referring to FIG. 10, the controller 230 is configured to estimate the moment of inertia of the drive motor M2 via the RLS identification.

Exemplarily, the controller 230 may include first moment-of-inertia estimation module 237. The first moment-of-inertia estimation module 237 can estimate the moment of inertia of the cutting motor via the RLS identification. The specific estimation principle may refer to related description on the RLS identification for estimating the moment of inertia of the cutting motor M1 in the above embodiment.

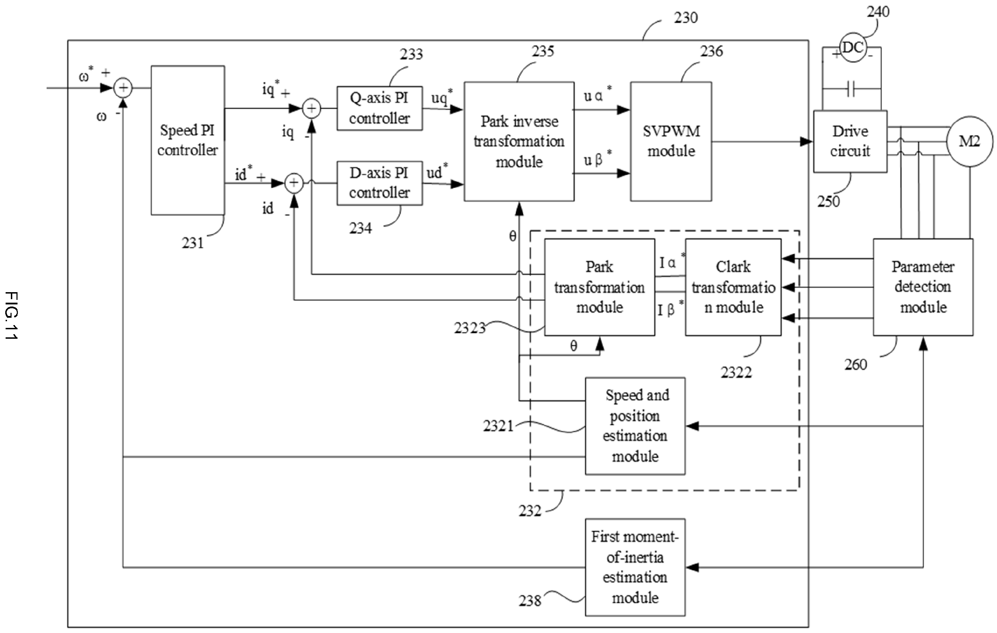

Optionally, FIG. 11 is still another schematic structural view of a drive system of a drive motor according to an embodiment of the present disclosure. As shown in FIG. 11, the controller 230 is configured to estimate the moment of inertia of the drive motor M2 via the MRAC.

Exemplarily, the controller 230 may include second moment-of-inertia estimation module 238. The second moment-of-inertia estimation module 238 can estimate the moment of inertia of the cutting motor via the MRAC. The specific estimation principle may refer to related description on the MRAC for estimating the moment of inertia of the cutting motor M1 in the above embodiment.

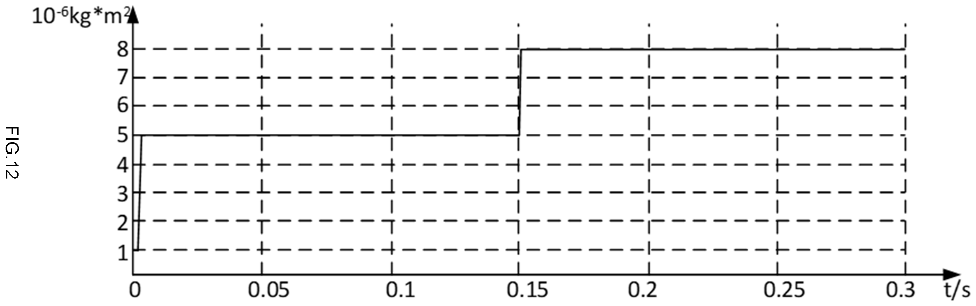

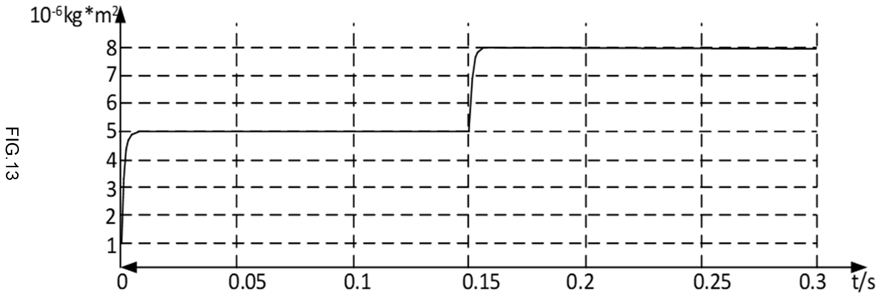

FIG. 12 is a model curve diagram for estimating a moment of inertia via an LS method according to an embodiment of the present disclosure. FIG. 13 is a model curve diagram for estimating a moment of inertia via MRAC according to an embodiment of the present disclosure. Referring to FIG. 12 and FIG. 13, to test the fan of the electric motor, the rotational speed of the motor is set to 15,000 rpm, the gain factor $\beta$ is set to 100, and the forgetting factor $\lambda$ is set to 0.95. Both the LS method and the MRAC can realize quick and accurate identification and tracking. As shown in FIG. 12 and FIG. 13, when the fan of the electric motor is normal, the estimated moment of inertia of the motor output shaft is $5 \times 10\text{-6kg·m2}$, while the moment of inertia changes abruptly to $8 \times 10\text{-6kg·m2}$ at 0.15 s. It can be seen from FIG. 12 that when the fan of the electric motor is faulty, the moment of inertia of the motor output shaft undergoes a significant change. Fault detection of the cutting blade is achieved by estimating the moment of inertia of the motor output shaft, which improves the reliability of the fault detection on the cutting blade.

Based on a same concept, an embodiment of the present disclosure further provides a lawn mower, including: a power supply device that is at least configured to supply power to a cutting motor; a cutting assembly that includes a cutter head, a plurality of cutting blades disposed on the cutter head, and the cutting motor driving the plurality of cutting blades to perform a cutting action; and a controller that is configured to estimate a moment of inertia of the cutting motor via a Kalman prediction unit, and control operation of the cutting motor based on the moment of inertia. The Kalman prediction unit estimates the moment of inertia of the cutting motor via EKF.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of protection of the present application.

**Claims**

1. An electric lawn mower, comprising:

   a cutting assembly that comprises a cutting blade and a cutting motor driving the cutting blade to perform a cutting action;
   a power supply device that comprises at least one battery pack and supplies power to the cutting motor; and
   a controller, wherein the controller is configured to determine whether the cutting blade is faulty according to a moment of inertia of the cutting motor, and control the cutting motor to stop or slow down when determining that the cutting blade is faulty.

2. The electric lawn mower according to claim 1, wherein the controller comprises a moment-of-inertia estimation module, and the moment-of-inertia estimation module is configured to estimate the moment of inertia according to mechanical data of the cutting motor.

3. The electric lawn mower according to claim 2, wherein the mechanical data of the cutting motor comprises at least an output torque and a rotational speed of the cutting motor.

4. The electric lawn mower according to claim 1, wherein the controller controls operation of the cutting motor via vector control to realize a function of the lawn mower.

5. The electric lawn mower according to claim 1, wherein the controller is configured to estimate the moment of inertia of the cutting motor via model reference adaptive control (MRAC), and control operation of the cutting motor based on the moment of inertia.

6.   The electric lawn mower according to claim 1, wherein the controller is configured to estimate the moment of inertia of the cutting motor via recursive least-squares (RLS) identification, and control operation of the cutting motor based on the moment of inertia.

7.   The electric lawn mower according to claim 1, wherein the controller is configured to estimate the moment of inertia of the cutting motor via a Kalman prediction unit, and control operation of the cutting motor based on the moment of inertia.

8.   The electric lawn mower according to claim 1, wherein the controller is configured to determine that the cutting blade is faulty when the moment of inertia meets a preset fault condition.

9.   The electric lawn mower according to claim 1, wherein the controller determines that the cutting blade is faulty when the moment of inertia exceeds a preset range.

10.   The electric lawn mower according to claim 8, wherein a fault of the cutting blade comprises at least blade loss or blade damage.

11.   The electric lawn mower according to claim 8, wherein the cutting motor comprises a three-phase brushless motor.

12.   The electric lawn mower according to claim 1, wherein the electric lawn mower comprises at least one of a push lawn mower, a riding lawn mower, and an intelligent lawn mower.

13.   An electric lawn mower, comprising:

a cutting assembly that comprises a cutting blade and a cutting motor driving the cutting blade to perform a cutting action;
a power supply device that comprises at least one battery pack and supplies power to the cutting motor;
an estimation unit that estimates a moment of inertia of the cutting motor based on an electrical parameter of the cutting motor; and
a controller that is configured to control operation of the cutting motor according to the moment of inertia.

14.   The electric lawn mower according to claim 13, wherein the controller is configured to estimate the moment of inertia of the cutting motor via a Kalman prediction unit, and control the operation of the cutting motor based on the moment of inertia.

15.   The electric lawn mower according to claim 13, wherein the controller is configured to determine that the cutting blade is faulty when the moment of inertia meets a preset fault condition.

16.   The electric lawn mower according to claim 13, wherein the controller determines that the cutting blade is faulty when the moment of inertia exceeds a preset range.

17.   The electric lawn mower according to claim 15, wherein a fault of the cutting blade comprises at least blade loss or blade damage.

18.   An electric power tool, comprising:

a drive motor that comprises an output shaft;
a rotating device that is disposed on the output shaft and driven by the output shaft to rotate; and
a controller that is configured to estimate a moment of inertia of the drive motor, and estimate a state change of the rotating device according to a change of the moment of inertia, thereby controlling operation of the drive motor.

19.   The electric power tool according to claim 18, wherein the controller controls the operation of the drive motor via vector control to realize a function of the electric power tool.

20.   The electric power tool according to claim 18, wherein the controller is configured to estimate the moment of inertia of the drive motor via MRAC.

21. The electric power tool according to claim 18, wherein the controller is configured to estimate the moment of inertia of the drive motor via RLS identification.

22. The electric power tool according to claim 19, wherein the controller is configured to determine whether the rotating device is faulty according to the moment of inertia, and control the drive motor to stop when determining that the rotating device is faulty.

23. The electric power tool according to claim 18, wherein the rotating device comprises a fan or a cutting blade.

FIG. 1

100a

170a

110a

111a

FIG. 2

122

FIG. 3

FIG. 4

FIG. 5

FIG. 6

FIG. 7

FIG. 8

FIG.9

FIG.10

FIG.11

FIG.12

FIG.13

# EP 4 751 547 A1

## INTERNATIONAL SEARCH REPORT

International application No.

**PCT/CN2024/120466**

### A. CLASSIFICATION OF SUBJECT MATTER

A01D34/64(2006.01)i; H02P6/06(2006.01)i

According to International Patent Classification (IPC) or to both national classification and IPC

### B. FIELDS SEARCHED

Minimum documentation searched (classification system followed by classification symbols)

IPC: A01D,H02P

Documentation searched other than minimum documentation to the extent that such documents are included in the fields searched

Electronic data base consulted during the international search (name of data base and, where practicable, search terms used)

CNABS; CNTXT; CNKI; DWPI; VEN: 马达/电机/驱动, 转动惯量/惯性, 刀片, 故障, 控制, 降速/停止, motor/driv+, inertia, cutter/blade, fault/failure, control+, decelerat+/stop+

### C. DOCUMENTS CONSIDERED TO BE RELEVANT

| Category* | Citation of document, with indication, where appropriate, of the relevant passages | Relevant to claim No. |
|---|---|---|
| PX | CN 117335704 A (NANJING QUANFENG TECHNOLOGY CO., LTD.) 02 January 2024 (2024-01-02) <br> description, paragraphs 34-85, and figures 1-9 | 1-23 |
| X | CN 115428643 A (NANJING QUANFENG TECHNOLOGY CO., LTD.) 06 December 2022 (2022-12-06) <br> description, paragraphs 3-38, and figures 1-6 | 1-23 |
| X | CN 107371562 A (NANJING CHERVON INDUSTRY CO., LTD.) 24 November 2017 (2017-11-24) <br> description, paragraphs 39-57, and figures 1-7 | 1-23 |
| X | JP 2019187432 A (SASAKI CORP.) 31 October 2019 (2019-10-31) <br> claims 1-4, and the drawings | 1-23 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 December 2024** | **06 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/120466**

| Patent document cited in search report | | | Publication date (day/month/year) | Patent family member(s) | | | Publication date (day/month/year) |
|---|---|---|---|---|---|---|---|
| CN | 117335704 | A | 02 January 2024 | None | | | |
| CN | 115428643 | A | 06 December 2022 | None | | | |
| CN | 107371562 | A | 24 November 2017 | US | 2019021223 | A1 | 24 January 2019 |
| | | | | US | 10869424 | B2 | 22 December 2020 |
| | | | | WO | 2017198066 | A1 | 23 November 2017 |
| JP | 2019187432 | A | 31 October 2019 | JP | 7022409 | B2 | 18 February 2022 |

Form PCT/ISA/210 (patent family annex) (July 2022)

**REFERENCES CITED IN THE DESCRIPTION**

**Patent documents cited in the description**

- CN 202311428602